# EUROPEAN PATENT APPLICATION

(11) **EP 3 944 977 A1**
(43) Date of publication of application: **02.02.2022**
(21) Application number: 20188930.0
(22) Date of filing: 31.07.2020
(51) Int. Cl.: B60K 6/46, B60W 10/06, B60W 10/08, B60W 10/26, B60W 10/30, B60W 20/10, B60W 20/17, B60W 20/19, B60W 30/182, B60W 30/188, B60W 20/13, B60W 30/20, B60K 6/26

(54) **OPERATING POINT CONTROLLER**

(71) Applicant: VOLVO CAR CORPORATION, 405 31 Göteborg (SE)
(72) Inventor: ERIKSSON, Andreas, 405 31 Göteborg (SE); EKSTRÖM, Markus, 405 31 Göteborg (SE); ALMKVIST, Göran, 405 31 Göteborg (SE); BJÖRKHOLTZ, Jonas, 405 31 Göteborg (SE)
(74) Representative: Maiwald Patent- und Rechtsanwaltsgesellschaft mbH

(57) **Abstract**

A system for controlling an operating point of a power source for a propulsive e-machine in a hybrid electric vehicle, comprising: a power train comprising a power source and at least one propulsive e-machine, wherein the power source comprises an integrated starter generator and an internal combustion engine; at least one desired operating point for the power source comprising at least one characteristic parameter; an operating point component (105) configured to query the at least one desired operating point and to distribute the control of the at least one desired operating point to a control of the internal combustion engine or to a control of the integrated starter generator control, wherein in case the at least one characteristic parameter of the at least one desired operating point is in a predetermined limit, the operating point component (105) distributes the control of the at least one desired operating point to the control of the internal combustion engine (106), and in case the at least one characteristic parameter of the at least one desired operating point is beyond the predetermined limit, the operating point component (105) distributes the control of the at least one desired operating point to the control of the integrated starter generator (107).

## Description

### TECHNICAL FIELD

The present disclosure relates to a system for controlling an operating point, a control device, an electric vehicle comprising such a control device and a use of such a control device in a hybrid electric vehicle.

### BACKGROUND ART

In the prior art, hybrid electric vehicles are known in variety of different designs. For example, serial hybrid electric vehicles comprising an electric drive train with a power source and a propulsive e-machine are known. The power source comprises an internal combustion engine (ICE) and an integrated starter generator (ISG), wherein the propulsive e-machine is able to provide the entire power for driving the car. The efficiency of the power source depends on selected operating points, wherein some operating points provide an increased ICE efficiency and improved NVH characteristics of the ICE. However, the deviation from such beneficial operating points result in a decreased efficiency.

In view of this, it is found that a further need exists to provide an improved system for controlling an operating point for a propulsive e-machine in a hybrid electric vehicle.

### SUMMARY

In the view of the above, it is an object of the present invention to provide an improved system for controlling an operating point for a propulsive e-machine in a hybrid electric vehicle.

These and other objects, which become apparent upon reading the following description, are solved by the subject matter of the independent claims. The dependent claims refer to preferred embodiments of the invention.

According to a first aspect, a system for controlling an operating point of a power source for a propulsive e-machine in a hybrid electric vehicle is provided, comprising: a power train comprising a power source and at least one propulsive e-machine, wherein the power source comprises an integrated starter generator and an internal combustion engine; at least one desired operating point for the power source comprising at least one characteristic parameter; an operating point control configured to query the at least one desired operating point and to distribute the control of the at least one desired operating point to a control of the internal combustion engine or to a control of the integrated starter generator control, wherein in case the at least one characteristic parameter of the at least one desired operating point is in a predetermined limit (e.g. in brute force situations), the operating point control distributes the control of the at least one desired operating point to the control of the internal combustion engine, and in case the at least one characteristic parameter of the at least one desired operating point is beyond the predetermined limit (e.g. where speed and precision is important), the operating point control distributes the control of the at least one desired operating point to the control of the integrated starter generator.

In other words, the present disclosure provides a system for distributing the control of the operating point of the power source either to the control of the internal combustion engine or to the control of the integrated starter generator based on an analysis of the operating conditions. The operating conditions may comprise stationary and dynamic conditions. The operating point of the internal combustion engine may be defined by torque and rotational speed. In dependency of the operating point, the efficiency of energy conversion of the internal combustion engine may increase or decrease. The operating point of the integrated starter generator may also be defined by torque and rotational speed, wherein the torque may depend on a magnetic field of the integrated starter generator. Via a mechanical connection between of an output shaft of the internal combustion engine and an input shaft of the integrated starter generator, the operating point of the internal combustion engine, i.e. torque and rotational speed, may be controlled either by adjusting a throttle position of the fuel supply and/or air supply by means of the control of the internal combustion engine or by a adjusting the magnetic field of the integrated starter generator by means of the control of the integrated starter generator. In case of small torque fluctuations of the internal combustion engine, the torque of the integrated starter generator may be adjusted to correct the torque fluctuations of the internal combustion engine. This may be advantageous due to a more precise and faster control of the operating point of the internal combustion engine, because the reaction time of the control of the integrated starter generator is smaller than the reaction time of the control of the internal combustion engine. Furthermore, the more precise and faster control of the operating point by the control of the integrated starter generator may result in a more energy efficient operation of the internal combustion engine for small alterations of the operating point and stationary operating points. Furthermore, the control of the operating point of the internal combustion engine by means of the control of the integrated starter generator may resolve the danger of throttle oscillations, which may occur by torque fluctuations and a big reaction time of the control of internal combustion engine. In case of large alterations of the operating point, e.g. a high increase of the power demand, the control of the internal combustion engine gains the priority of the operating point of the internal combustion engine. This may be advantageous due to the necessary adjustment of the throttle position for the fuel supply respectively the increased power supply. In this context, it should be noticed that the control of the internal combustion engine may control over all operation conditions the internal combustion engine, but the control of the integrated starter generator is more suitable for controlling the operating point of the internal combustion engine for small alternations of the operating point and stationary operating points. The propulsive e-machine can be either an asynchronous e-motor or a synchronous e-motor. The internal combustion engine can be either a diesel motor or an otto motor. The integrated starter generator can be either an asynchronous e-motor or a synchronous e-motor or a DC e-motor, wherein the e-motor works as generator for transmission of mechanical energy in electrical energy and as an e-motor for starting the internal combustion engine. The term operating point in this context has to be understood broadly and comprises a variety of operating points of the internal combustion engine and of the integrated starter generator, but relates preferably to the operating of the internal combustion engine. The variety of operating points comprise a high efficiency of energy transmission and other beneficial aspects, e.g. good NVH behaviour. The term characteristic parameter in this context has to be understood broadly. The characteristic parameter may comprise torque, rotational speed, current, electrical power. The characteristic parameter may comprise the value itself and the change of the value. The term predetermined value in this context has to be understood broadly and comprises values and changes of values.

In an implementation, the desired operating point may be determined by using a desired power of the propulsive e-machine and feedback information of the power train and/or an electrical system power drain of the hybrid electric vehicle and/or a charge state of a battery of the hybrid electric vehicle. The integrated starter generator produces either electrical energy directly for the propulsive e-machine or the battery of the hybrid electric vehicle. The battery is preferably an electrochemical battery, but can also be a high-power capacitor. The use of a plurality of batteries is also possible. The power demand of the internal combustion engine depends on the above listed part systems of the hybrid electric vehicle. The overall consideration of the operation conditions of the hybrid electric vehicle for determining the desired operating point impedes undesired NVH characteristics, e.g. starting the internal combustion engine while propulsive e-machine being stopped, and critical charge states of the battery.

In an implementation, the control, which has not been distributed the control over the desired operating point, may keep its control parameters constant; and the control, which has been distributed the control over the desired operating point, may readjust its control parameters in order to approximate the desired operating point. In other words, e.g. in case of stationary operating point, the control of the internal combustion engine keeps the throttle position constant and the control of the integrated starter generator adjusts the magnetic field (e.g. change of anchor voltage or change of current in the stator) in order to control the operating point of integrated combustion engine. This approach simplifies the control of the operating point of internal combustion engine due to the omission of otherwise necessary complex filter functions for ICE control for torque fluctuations. This may advantageous for NVH characteristics of the drive train.

In an implementation, the desired operating point may comprise a rotational speed and/or a torque of the power source. The desired operating point may relate either to the internal combustion engine or to the integrated starter generator or both, but preferably to the internal combustion engine. The desired operating point may comprise pairs of rotational speed and torque, wherein the efficiency and/or the power of the power source vary with the pairs of rotational speed and torque.

In an implementation, a requested charge power of the power source may be determined by using the desired power of the propulsive e-machine and feedback information of the power train. In other words the determination considers an initial state of the propulsive e-machine (e.g. current speed) and a desired state of the propulsive e-machine (e.g. desired speed), and calculates the necessary torque, rotational speed and power demand. The requested charge power may further comprise a necessary charge load of a battery and/or a power demand of an electric system of the hybrid electric vehicle (e.g. radio or air condition). The requested charge power may be determined by means of determining unit.

In an implementation, an information of the requested charge power may be transmitted to the control of the internal combustion engine and to the control of the integrated starter generator. The requested charge power may serve as input parameter for the determination of a desired operating point for the internal combustion engine or the integrated starter generator or both of them. The information of the requested charge power may transmitted by means of a bus system.

In an implementation, the at least one characteristic parameter may comprise an operating state of the power source, wherein the operating state is either stationary or dynamic. The term stationary means in this context that the operating point does not change its values during a specific operating time. The term dynamic means in the context that the operating point changes its values during a specific operating time (e.g. due an increase of power demand).

In an implementation, the operating state may be determined by comparing the desired operating point with a current operating point. By comparing the desired operating point with a current operating point, it may be determined whether the operating state is stationary or dynamic or if the change of the operating point is small or big. The determination may be carried out by determining unit.

In an implementation, the proposed system may comprise a plurality of desired operating points. The internal combustion engine and or the integrated starter generator have specific operating characteristics, wherein a plurality of desired operating points (e.g. high efficiency) exist.

In an implementation, the operating control may query the at least one desired operating point and distributes the control of the at least one desired operating point to the control of the internal combustion engine or to the control of the integrated starter generator continuously. By means of a continuous query of the point and continuous distribution of the control priority over the operating point the efficiency of the energy conversion may be increased due to the improved controlling strategy.

A further aspect relates to a control device for controlling an operating point of a power source for a propulsive e-machine in a hybrid electric vehicle, comprising: an internal combustion engine control configured to control a supply of a mechanical power of an internal combustion engine in dependency of at least one desired operating point; an integrated starter generator control configured to control a supply of an electric power of an integrated starter generator in dependency of the at least one desired operating point; an operating point control configured to query the at least one desired operating point and to distribute a control of the at least one desired operating point to the internal combustion control or to a control of the integrated starter generator control.

In an implementation the control device may comprise: a energy management component configured to determine a desired electric power for an propulsive e-machine; a charge power component configured to determine a requested charge power for a power source comprising an integrated starter generator and an internal combustion engine; an operating point component configured to determine the desired operating point; an feedback component configured to provide feedback information, e.g. current rotational speed and torque of the electric engine, to the energy management component and or charge power component and or operating point component and or the operating point control.

In an implementation, the operating point component may provide the information of the desired operating point to the operating point control; and the energy management component provides the information of the desired electric power to the charge power component.

A further aspect relates to a use of the control device explained above in hybrid electric vehicle. A further aspect relates to an electric use of the control device explained above in hybrid electric vehicle.

### BRIEF DESCRIPTION OF DRAWINGS

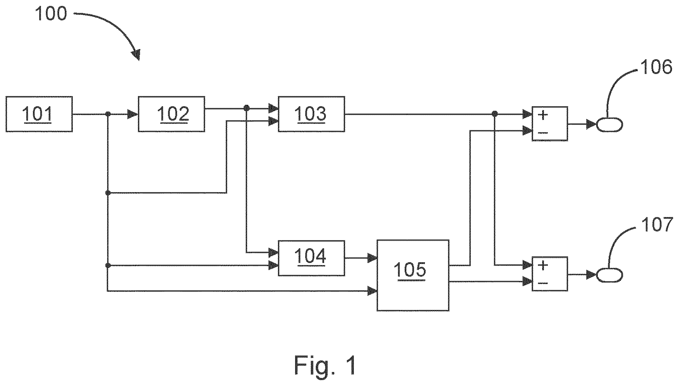

In the following, the disclosure is described exemplarily with reference to the enclosed figure, in which
- **Figure** 1: is a schematic view of the control device according to a further embodiment of the present disclosure.

Notably, the figures are merely schematic representations and serve only to illustrate an embodiment of the present disclosure. Identical or equivalent elements are in principle provided with the same reference signs.

### DESCRIPTION OF EMBODIMENTS

Figure 1 shows a schematic view of a control device 100 according to an embodiment of the present disclosure. The control device 100 comprises a feedback component 101, which provides current system information (e.g. current rotational speed and torque of the internal combustion engine and desired rotational speed of propulsive e-machine). The control device 100 further comprises an energy management component 102, which determines based on system feedback from the feedback component 101 a desired electrical power. The information over the desired electrical power and system feedback is transferred to a charge power component 103, which determines a requested charge power for the power source comprising an integrated starter engine and internal combustion engine. The control device 100 further comprises an operating point component 104, which determines based on system feedback and the desired electrical power a desired operating point for the internal combustion engine. The information of the desired operating point and system feedback is transferred to the operating point control 105, which compares the desired operating point with the current operating point and distributes the control of the operating point in dependency of the comparison result either to the control of the internal combustion engine 106 or the control of the integrated starter generator 107. Furthermore, the information over the requested charge power is transferred from the charge power component 103 to the control of the internal combustion engine 106 and the control of the integrated starter generator 107.

In the following, an example of operating the control device shown in Figure 1 is explained. In a first step, a desired electrical power is determined, wherein the determining considers the power demand of the propulsive e-machine and the power demand of the remaining electrical system (e.g. air condition, state of charge of the battery). In a second step, a requested charge power of a power source comprising an internal combustion engine and an integrated starter generator is determined. The determining of the requested charge power considers the desired electrical power. The requested charge power serves as input for the control of the internal combustion engine and the control of the integrated starter generator, wherein the input is transferred into control commands (i.e. throttle position of internal combustion engine, change of anchor voltage of the integrated starter generator or change of current in the stator of the integrated starter generator). In a third step, a desired operating point for an internal combustion engine is determined, wherein the determining considers the desired electrical power. Based on the desired electrical power a mechanical input power for an integrated starter generator is derived. Based on the necessary mechanical input power the desired operating point of the internal combustion engine is determined, wherein the operating point comprises the torque and the rotational speed of the internal combustion engine. In a fourth step, a control of the desired operating point is distributed to either a control of the internal combustion engine or a control of the integrated starter generator, wherein the distributing considers the desired operating point and a current operating point. By comparing the current operating point and the desired operating point, the change of the torque and rotational speed are calculated. The change of the torque and the rotational speed serve as characteristic values. These characteristic values are compared with predetermined limits for the changes of the torque and rotational speed. In case the characteristic values are below the predetermined limits, which means that the changes of torque and/or rotational speed are small, the control of the desired operating point is distributed to the control of the integrated starter generator otherwise to the control of the internal combustion engine. The respectively other control (i. e. either the control of the internal combustion engine or the control of the integrated starter generator) keeps its control parameters constant.

Other variations to the disclosed embodiment can be understood and effected by those skilled in the art in practicing the claimed subject matter, from the study of the drawings, the disclosure, and the appended claims. In particular, respective parts/functions of the respective embodiments described above may also be combined with each other. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 100: control device
- 101: system feedback component
- 102: energy management component
- 103: charge power component
- 104: operating point component
- 105: operating point control
- 106: control of the internal combustion engine
- 107: control of the integrated starter generator

## Claims

1. A system for controlling an operating point of a power source for a propulsive e-machine in a hybrid electric vehicle, comprising:
a power train comprising a power source and at least one propulsive e-machine, wherein the power source comprising an integrated starter generator and an internal combustion engine, wherein at least one desired operating point for the power source comprising at least one characteristic parameter;
an operating point component (105) configured to query the at least one desired operating point and to distribute the control of the at least one desired operating point to a control of the internal combustion engine or to a control of the integrated starter generator control; wherein
in case the at least one characteristic parameter of the at least one desired operating point being in a predetermined limit, the operating point component (105) distributes the control of the at least one desired operating point to the control of the internal combustion engine (106); and
in case the at least one characteristic parameter of the at least one desired operating point being beyond the predetermined limit, the operating point component (105) distributes the control of the at least one desired operating point to the control of the integrated starter generator (107).

2. The system according to claim 1, the desired operating point being determined by using a desired power of the propulsive e-machine and feedback information of the power train and/or an electrical system power drain of the hybrid electric vehicle and/or a charge state of a battery of the hybrid electric vehicle.

3. The system according to claim 1 or claim 2, the control, which has not been distributed the control over the desired operating point, keeps its control parameters constant; and the control, which has been distributed the control over the desired operating point, readjusts its control parameters in order to approximate the desired operating point.

4. The system according to any one of the preceding claims, the desired operating point comprising a rotational speed and/or a torque of the power source.

5. The system according to any one of the preceding claims, a requested charge power of the power source being determined by using the desired power of the propulsive e-machine and feedback information of the power train.

6. The system according to claim 5, an information of the requested charge power being transmitted to the control of the internal combustion engine and to the control of the integrated starter generator.

7. The system according to any one of the preceding claims, the at least one characteristic parameter comprising an operating state of the power source, wherein the operating state is either stationary or dynamic.

8. The system according to claim 7, the operating state being determined by comparing the desired operating point with a current operating point.

9. The system according to any one of the preceding claims, comprising a plurality of desired operating points.

10. The system according to any one of the preceding claims, the operating point component (105) queries the at least one desired operating point and distributes the control of the at least one desired operating point to the control of the internal combustion engine (106) or to the control of the integrated starter generator (107) continuously.

11. A control device (100) for controlling an operating point of a power source for a propulsive e-machine in a hybrid electric vehicle, comprising:
an internal combustion engine control (106) configured to control a supply of a mechanical power of an internal combustion engine in dependency of at least one desired operating point;
an integrated starter generator control (107) configured to control a supply of an electric power of an integrated starter generator in dependency of the at least one desired operating point;
an operating point component (105) configured to query the at least one desired operating point and to distribute a control of the at least one desired operating point to the internal combustion control (106) or to a control of the integrated starter generator control (107).

12. The control device (100) according to claim 11, comprising:
a energy management component (102) configured to determine a desired electric power for an propulsive e-machine;
a charge power component (103) configured to determine a requested charge power for a power source comprising an integrated starter generator and an internal combustion engine;
an operating point component (104) configured to determine the desired operating point;
an feedback component (101) configured to provide feedback information, e.g. current rotational speed and torque of the electric engine, to the energy management component (102) and or charge power component (103) and or operating point component (104) and or the operating point component (105).

13. The control device (100) according to claim 12,
the operating point component (104) provides the information of the desired operating point to the operating point component (105); and
the energy management component (102) provides the information of the desired electric power to the charge power component (103).

14. Use of a control device (100) according to any of the claims 10 to 14 in a hybrid electric vehicle.

15. Hybrid electric vehicle comprising a control device (100) according to any one of claims 10 to 14.
